# EUROPEAN PATENT APPLICATION

(11) **EP 1 876 613 A1**
(43) Date of publication of application: **09.01.2008**
(21) Application number: 05842250.2
(22) Date of filing: 26.12.2005
(51) Int. Cl.: H01G 9/04, H01G 9/00, H01G 9/012, H01G 9/028

(54) **MULTILAYER SOLID ELECTROLYTIC CAPACITOR AND ITS MANUFACTURING PROCESS**

(30) Priority: 20.04.2005 JP 2005121868
(71) Applicant: Saga Sanyo Industries Co., Ltd, Kishima-gun, Saga 849-2102 (JP); SANYO ELECTRIC CO., LTD., Moriguchi-shi, Osaka-fu 570-8677 (JP)
(72) Inventor: MATUMOTO, Takayuki, Sage 3480022 (JP)
(74) Representative: Glawe, Delfs, Moll
(86) International application number: PCT/JP2005/023730
(87) International publication number: WO 2006/114917

(57) **Abstract**

[Problem] A multi-layered solid electrolytic capacitor and a method of manufacturing the capacitor are provided that achieve an improved production yield as well as improved welding strength and product reliability by preventing sparks and welding burrs that develop during resistance welding.

[Means for Solving the Problem] A multi-layered solid electrolytic capacitor (10) includes a plurality of capacitor elements (6), each comprising a dielectric oxide film (2) formed on a surface of a valve metal, a main body part (8) having a cathode layer formed on a portion of the surface of the dielectric oxide film (2), and an anode lead part (7) in which the dielectric oxide film (2) is exposed, wherein the capacitor elements are in a stacked condition and the anode lead parts (7) of adjacent ones of the capacitor elements (6) are weld-secured to one another. In the multi-layered solid electrolytic capacitor, a removed portion A from which the dielectric oxide film (2) has been removed exists from a weld-secured portion (20) to an edge portion (21) of the anode lead part (7).

## Description

### TECHNICAL FIELD

The present invention relates to multi-layered solid electrolytic capacitors and methods of manufacturing the same.

### BACKGROUND ART

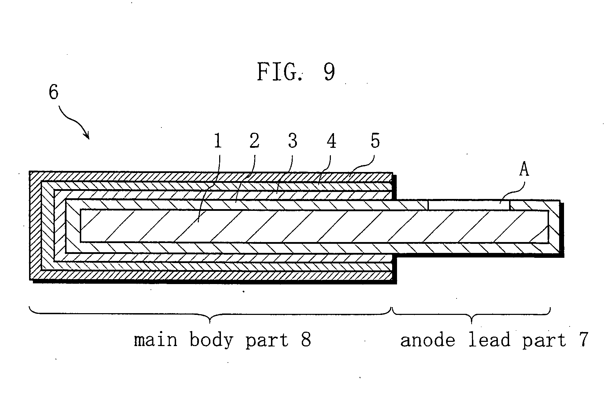

A conventional multi-layered solid electrolytic capacitor has been fabricated in the following manner. As illustrated in Fig. 9, a dielectric oxide film 2 is formed over the surface of a valve metal 1 (e.g., aluminum), and a solid electrolyte layer 3, a carbon layer 4, and a silver paint layer 5 are successively formed over the surface of the dielectric oxide film 2 except for an anode lead part 7 to prepare a capacitor element 6. Subsequently, a plurality of the capacitor elements 6 in a stacked condition is connected to an anode terminal by resistance welding, and they are connected to a cathode terminal by a conductive adhesive. Finally, these components are covered with an exterior resin to produce a multi-layered solid electrolytic capacitor.

The resistance welding for connecting the just-mentioned capacitor elements 6 to the anode terminal is carried out as follows. The anode lead part 7 of a capacitor element 6 and the anode terminal are connected by resistance welding, and to the anode lead part 7 of the capacitor element 6, the anode lead part 7 of another capacitor element 6 to be stacked thereon is welded. This process is repeated to stack the capacitor elements 6 (for example, see Patent Document 1).

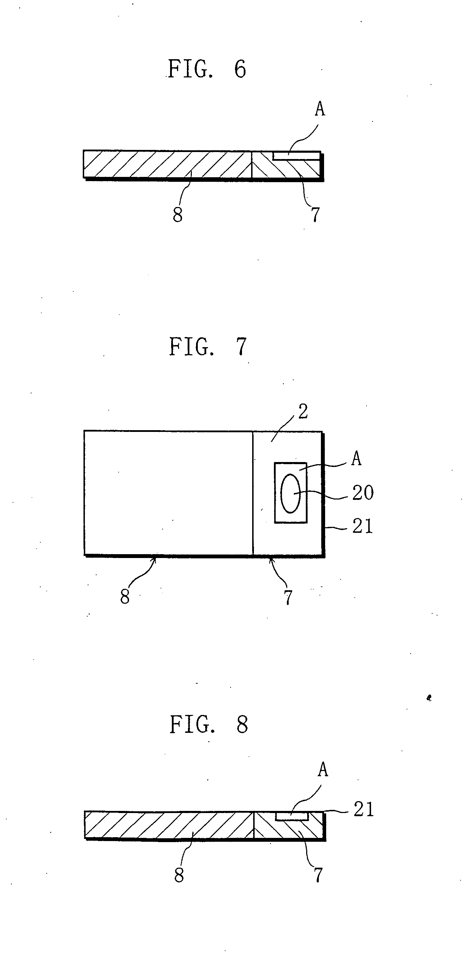

Here, resistance welding is a technique in which materials to be welded are compressed by electrodes to form a current conduction path, and a large current is passed through the current conduction path within a short time to cause resistance heating so that the materials to be welded are melt bonded to each other. Therefore, it is not easy to stabilize the welding when the metal 1 is a low-resistance and high-heat-radiating material, such as aluminum. In addition, since the surface of the metal 1 has been etching-processed and the oxide film 2, which is thermally stable, has been formed thereon, setting of welding conditions is very difficult. In view of this, a technique is commonly performed in which, as illustrated in Figs. 7 and 8, only the oxide film 2 that is in the part of the anode lead part 7 to be welded is removed by laser application, mechanical polishing, or the like so as to allow a removed portion A to be present in the anode lead part 7.
[Patent Document 1] Japanese Published Unexamined Patent Application No. 11-135367

### DISCLOSURE OF THE INVENTION

### PROBLEMS TO BE SOLVED BY THE INVENTION

However, the just-described method of removing the oxide film only from the part to be welded has the problem that sparks or welding burrs develop at an edge portion 21 of the anode lead part 7 when stacking capacitor elements as shown in Figs. 7 and 8 and resistance welding the anode lead parts 7. It is believed that this development of sparks and welding burrs occurs because a condition like a spark plug is formed due to deformation of the metal 1 during the compression using the electrode or complicated changes of the current conduction path between the surface and inside of the metal 1 at the time of welding, which results in sparks. When such sparks or welding burrs develop, a problem arises that welding strength and product reliability are impaired in addition to degradation in the production yield rate.

The present invention has been accomplished in view of the foregoing problems, and it is an object of the invention to provide a multi-layered solid electrolytic capacitor and a method of manufacturing the capacitor, with which the production yield is improved by preventing the sparks and the welding burrs that develop during resistance welding and the welding strength and product reliability are improved.

### MEANS FOR SOLVING THE PROBLEMS

In order to solve the foregoing problems, the invention as set forth in claim 1 is characterized in that, in a multi-layered solid electrolytic capacitor comprising a plurality of capacitor elements, each comprising a dielectric oxide film formed on a surface of a valve metal, a main body part having a cathode layer formed on a portion of the surface of the dielectric oxide film, and an anode lead part in which the dielectric oxide film is exposed, wherein the anode lead parts of adjacent ones of the capacitor elements are weld-secured to one another with the capacitor elements being in a stacked condition, a portion from which the dielectric oxide film has been removed exists in an edge portion of the anode lead part that is substantially parallel to a boundary portion between the main body part and the anode lead part and that is not in contact with the main body part.

Since a portion from which the dielectric oxide film has been removed exists in an edge portion of the anode lead part that is substantially parallel to a boundary portion between the main body part and the anode lead part and that is not in contact with the main body part as described above, electric current can escape to the edge portion at the time of the resistance welding when manufacturing the multi-layered solid electrolytic capacitor. Thus, sparks and welding burrs are prevented from occurring. As a result, it is possible to construct a multi-layered solid electrolytic capacitor with improved welding strength and product reliability.

The invention as set forth in claim 2 is characterized in that, in a multi-layered solid electrolytic capacitor according to claim 1, the dielectric oxide film-removed portion that exists in the above-described edge portion is provided so as to extend to the weld-secured portion.

With the just-described configuration, the region in which electric current flows during the resistance welding becomes wider, making it possible to construct a multi-layered solid electrolytic capacitor in which sparks and welding burrs are prevented from occurring.

The invention as set forth in claim 3 is characterized in that, in a multi-layered solid electrolytic capacitor according to claim 2, the dielectric oxide film-removed portion exists so as to be widened to vicinities of both side portions of the anode lead part.

With the just-described configuration, the weld-secured portion is allowed to remain within the area of the removed portion even when a misalignment occurs along the side portion of the anode lead part when stacking capacitor elements on one another in the manufacturing of the multi-layered solid electrolytic capacitor. Therefore, it is possible to construct a multi-layered solid electrolytic capacitor in which sparks and welding burrs are prevented from occurring.

The invention as set forth in claim 4 is characterized in that, in a multi-layered solid electrolytic capacitor according to claim 2, the dielectric oxide film-removed portion exists so as to be widened to a vicinity of the boundary portion between the anode lead part and the main body part.

With the just-described configuration, the weld-secured portion is allowed to be present within the area of the removed portion even when a misalignment occurs along the direction perpendicular to the boundary portion between the anode lead part and the main body part when stacking capacitor elements on one another in the manufacturing of the multi-layered solid electrolytic capacitor. Therefore, it is possible to construct a multi-layered solid electrolytic capacitor in which sparks and welding burrs are prevented from occurring.

The invention as set forth in claim 5 is characterized in that, in a multi-layered solid electrolytic capacitor according to any one of claims 1 through 4, the dielectric oxide film-removed portion exists in either one of an upper surface or a lower surface of the anode lead part.

The above-described advantageous effects are exhibited when the dielectric oxide film-removed portion exists in either one of an upper surface or a lower surface of the anode lead part as described above.

The invention as set forth in claim 6 is characterized in that, in a multi-layered solid electrolytic capacitor according to any one of claims 1 through 4, the dielectric oxide film-removed portion exists in both upper and lower surfaces of the anode lead part.

With the just-described configuration, the region in which electric current flows during the resistance welding becomes wider than that in the multi-layered solid electrolytic capacitor according to claim 5, and therefore, it becomes possible to construct a multi-layered solid electrolytic capacitor in which sparks and welding burrs are further prevented from occurring.

The invention as set forth in claim 7 is characterized in that, in a multi-layered solid electrolytic capacitor according to any one of claims 1 through 6, the valve metal comprises one of aluminum, tantalum, and niobium, and a solid electrolyte layer comprises one of a polythiophene-based conductive polymer, a polypyrrole-based conductive polymer, a polyaniline-based conductive polymer, a polyfuran-based conductive polymer, and manganese dioxide.

The invention as set forth in claim 8 is a method of manufacturing a multi-layered solid electrolytic capacitor characterized by comprising: a first step of forming a dielectric oxide film on a surface of a valve metal, and thereafter forming a cathode layer on a portion of a surface of the dielectric oxide film to produce a capacitor element comprising a main body part and an anode lead part, the main body part having the cathode layer and the anode lead part having the dielectric oxide film that is exposed; a second step of removing the dielectric oxide film in an edge portion of the anode lead part opposing an interface between the main body part and the anode lead part; and a third step of weld-securing anode lead parts of adjacent ones of a plurality of capacitor elements that are in a stacked condition.

Electric current is allowed to escape to the edge portion of the anode lead part at the time of resistance welding by removing the dielectric oxide film in the edge portion of the anode lead part that is substantially parallel to a boundary portion between the main body part and the anode lead part and that is not in contact with the main body part of the capacitor element in the second step prior to stacking and welding the capacitor elements as described above. Therefore, sparks and welding burrs are prevented from occurring. As a result, the production yield improves, and it becomes possible to produce a multi-layered solid electrolytic capacitor with improved welding strength and product reliability.

The invention as set forth in claim 9 is characterized in that, in the second step in a method of manufacturing a multi-layered solid electrolytic capacitor according to claim 8, the dielectric oxide film is further removed from an edge portion of the anode lead part to a portion to be weld-secured, in addition to the removing the dielectric oxide film in the edge portion.

With the just-described configuration, the region in which electric current flows during the resistance welding becomes wider, making it possible to manufacture a multi-layered solid electrolytic capacitor in which sparks and welding burrs are prevented from occurring.

The invention as set forth in claim 10 is characterized in that, in the second step in a method of manufacturing a multi-layered solid electrolytic capacitor according to claim 9, the dielectric oxide film is removed as to be widened to vicinities of both side portions of the anode lead part.

The just-described configuration makes it possible to manufacture the foregoing multi-layered solid electrolytic capacitor according to claim 3.

The invention as set forth in claim 11 is characterized in that, in the second step in a method of manufacturing a multi-layered solid electrolytic capacitor according to claim 9, the dielectric oxide film is removed as to be widened to a vicinity of the boundary portion between the anode lead part and the main body part.

The just-described configuration makes it possible to manufacture the foregoing multi-layered solid electrolytic capacitor according to claim 4.

The invention as set forth in claim 12 is characterized in that, in the second step in a method of manufacturing a multi-layered solid electrolytic capacitor according to any one of claims 8 through 11, the dielectric oxide film is removed in either one of an upper surface or a lower surface of the anode lead part.

The just-described configuration makes it possible to manufacture the foregoing multi-layered solid electrolytic capacitor according to claim 5.

The invention as set forth in claim 13 is characterized in that, in the second step in a method of manufacturing a multi-layered solid electrolytic capacitor according to any one of claims 8 through 11, the dielectric oxide film is removed in both upper and lower surfaces of the anode lead part.

The just-described configuration makes it possible to manufacture the foregoing multi-layered solid electrolytic capacitor according to claim 6.

The invention as set forth in claim 14 is characterized in that, in the second step in a method of manufacturing a multi-layered solid electrolytic capacitor according to any one of claims 8 through 13, the dielectric oxide film of the anode lead part is removed by a laser method.

The dielectric oxide film can be removed reliably and quickly by removing the dielectric oxide film by a laser method as described above.

### ADVANTAGES OF THE INVENTION

According to the present invention, since a portion from which the dielectric oxide film has been removed exists in an edge portion of the anode lead part that is substantially parallel to a boundary portion between the main body part and the anode lead part that is not in contact with the main body part, electric current can escape to the edge portion at the time of the resistance welding when manufacturing the multi-layered solid electrolytic capacitor. Thus, sparks and welding burrs are prevented from occurring. As a result, the production yield improves, and it becomes possible to obtain a multi-layered solid electrolytic capacitor with improved welding strength and product reliability.

### BEST MODE FOR CARRYING OUT THE INVENTION

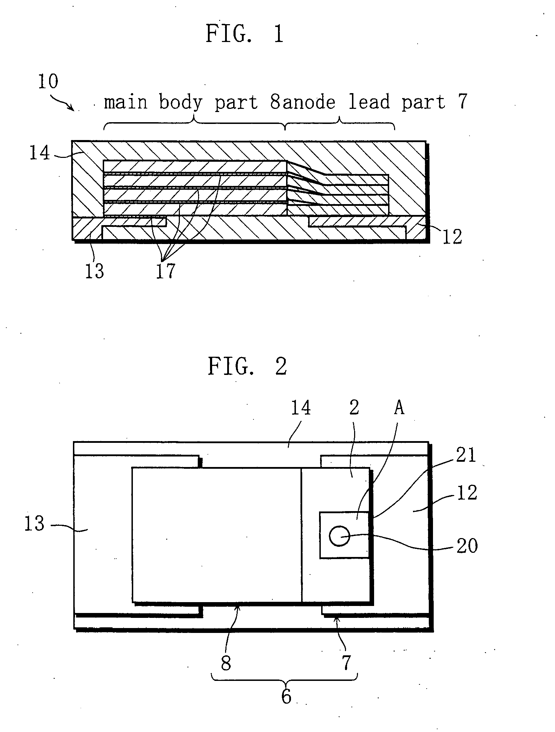

Hereinbelow, a multi-layered solid electrolytic capacitor according to the invention is described in detail with reference to Figs. 1 and 2. It should be construed that the multi-layered solid electrolytic capacitor according to the present invention is not limited to that shown in the following example, and various changes and modifications are possible without departing from the scope of the invention.

### (Structure of Multi-Layered Solid Electrolytic Capacitor)

Fig. 1 is a vertical cross-sectional view of a multi-layered solid electrolytic capacitor according to the present invention, and Fig. 2 is a plan view showing the multi-layered solid electrolytic capacitor from which an exterior resin has been removed. A multi-layered solid electrolytic capacitor 10 comprises a plurality of capacitor elements 6 stacked on one another, in which an anode terminal 12 and a cathode terminal 13 are attached to the lower surface of the capacitor element 6 that is in the lowermost position in a stacked condition. The capacitor elements 6, the anode terminal 12, and the cathode terminal 13 are covered with a synthetic resin 14 except for the lower surfaces of the anode terminal 12 and the cathode terminal 13. The capacitor element 6 comprises a dielectric oxide film 2 formed on a surface of a valve metal 1, a main body part 8 comprising a cathode layer having a solid electrolyte layer 3 (e.g., a polythiophene-based conductive polymer) formed on a portion of the dielectric oxide film 2, a carbon layer 4, and a silver paint layer 5, and an anode lead part 7 in which the dielectric oxide film 2 is exposed. With a plurality of the capacitor elements 6 being in a stacked condition, the anode lead parts 7 in adjacent ones of the capacitor elements 6 are weld-secured and the main body parts 8 of the adjacent ones of the capacitor elements 6 are adhesive-bonded to each other by a conductive adhesive 17, whereby the multi-layered solid electrolytic capacitor 10 is formed.

Here, in the capacitor element 6 used for the multi-layered solid electrolytic capacitor 10, a removed portion A in which the dielectric oxide film 2 has been removed exists from a weld-secured portion 20 to an edge portion 21 of the anode lead part 7, as illustrated in Fig. 2. The multi-layered solid capacitor 10 in which sparks and welding burrs developed during resistance welding is constructed because of the presence of removed portion A. It should be noted that the metal 1 is not limited to aluminum but may also be tantalum, niobium, and the like. The solid electrolyte layer 3 is not limited to a polythiophene-based conductive polymer, but may also be one of a polypyrrole-based conductive polymer, a polyaniline-based conductive polymer, a polyfuran-based conductive polymer, and manganese dioxide.

### (Manufacturing Method of Multi-Layered Solid Electrolytic Capacitor)

First, a method of manufacturing a capacitor element 6 is illustrated. This method is the same as a conventional method. First, the metal 1 was subjected to a formation process at a predetermined voltage in an aqueous solution of phosphoric acid or the like at a predetermined concentration, to form the dielectric oxide film 2 made of a metal oxide. The film thickness of the dielectric oxide film 2 was about 0.05 µm. Next, the capacitor element 6 was immersed to a predetermined position in a mixture solution of 3,4-ethylenedioxythiophene, ferric p-toluenesulfonate, and 1-butanol to form a solid electrolyte layer 3 made of a conductive polymer, 3,4-ethylenedioxythiophene, on the dielectric oxide film 2 by a chemical oxidative polymerization. The element in which the solid electrolyte layer had been formed was immersed in a solution in which carbon powder was diffused in an aqueous solution or an organic solvent, and then dried at a predetermined temperature for a predetermined time. This process was repeated several times to form a carbon layer 4. Further, a silver paint layer 5 was formed, and thus, a capacitor element 6 was fabricated.

Next, the dielectric oxide film 2 was removed prior to stacking and welding a plurality of capacitor elements 6. Specifically the dielectric oxide film 2 was removed from the weld-secured portion 20 to the edge portion 21 of the anode lead part 7 by laser application. The laser power in this laser application was from 3 to 5 KW.

Next, the capacitor element 6 in which the removed portion A of the dielectric oxide film 2 existed was connected to the anode terminal 12 by resistance welding, and the main body part 8 of the capacitor element 6 was adhesive-bonded to the cathode terminal 13 by the conductive adhesive 17. A plurality of the capacitor elements 6 stacked by laminating them with one another (four layers in the present example), and lastly, the stack was sealed by an exterior resin 14 to complete the multi-layered solid electrolytic capacitor.

Here, the just-described manufacturing method makes it possible to prevent sparks and welding burrs from occurring since the removed portion A of the dielectric oxide film 2 exists from the weld-secured portion 20 to the edge portion 21. As a result, the production yield improves, and it becomes possible to obtain the multi-layered solid electrolytic capacitor 10 with improved welding strength and product reliability.

### (Other Embodiments)

(1) Although the foregoing manufacturing method has described that the dielectric oxide film 2 is removed by laser application, it is also possible to remove the dielectric oxide film 2 by a mechanical means, such as a blade.

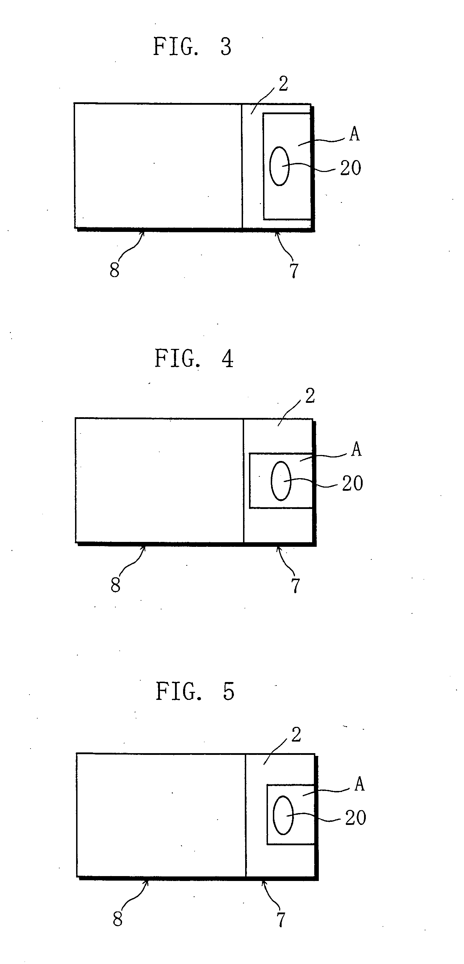

(2) The removed portion A of the dielectric oxide film 2 may be widened to the vicinity of both side portions of the anode lead part 7, as illustrated in Fig. 3. In the anode lead part 7, the removed portion A may also be widened to a vicinity of the boundary portion between the anode lead part 7 and the main body part 8, as illustrated in Fig. 4. By doing so, the current conduction area during resistance welding becomes wider, making it possible to prevent sparks and welding burrs developed during the welding from occurring. Moreover, even when a misalignment occurs, the weld-secured portion 20 is made to be present within the area of the removed portion A in stacking the capacitor elements 6. Therefore, it is possible to prevent sparks and welding burrs that develop during the welding from occurring.

(3) The dielectric oxide film 2 in the weld-secured portion 20 may be left unremoved and only the dielectric oxide film 2 in the edge portion 21 of the anode lead part 7 may be removed. It is also possible to prevent sparks and welding burrs in this manner as well.

(4) The dielectric oxide film-removed portion is not limited to be in the upper surface of the anode lead part 7 but may be in the lower face thereof. It may also be in both the upper and lower surfaces thereof.

### EXAMPLES

### (Example)

A multi-layered solid electrolytic capacitor fabricated in the same manner as described in the foregoing Best Mode for Carrying out the Invention was used as an example of the multi-layered solid electrolytic capacitor (see Figs. 5 and 6).

The multi-layered solid electrolytic capacitor in this manner is hereinafter referred to as the present invention capacitor X.

### (Comparative Example)

A multi-layered solid electrolytic capacitor was fabricated in the same manner as in the present invention capacitor X except that the dielectric oxide film 2 was removed from only the weld-secured portion 20, and the multi-layered solid electrolytic capacitor thus fabricated was used as a comparative example of the multi-layered solid electrolytic capacitor (see Figs. 7 and 8).

The multi-layered solid electrolytic capacitor fabricated in this manner is hereinafter referred to as a comparative capacitor Y.

### (Experiment)

150 samples of each the present invention capacitor X and the comparative capacitor Y were fabricated, and the quality of welding was determined for each of the capacitors. The results are shown in Table 1.

**[TABLE 1]**

| | Number of welding defects | Welding defect rate (%) |
|---|---|---|
| Comparative Capacitor Y | 8 | 5.3 |
| Present Invention Capacitor X | 0 | 0 |

In Table 1, the term "welding defects" indicates the number of samples in which detachment/breakage/welding burrs occurred in the capacitor elements, which is the number of defective products per 150 tested samples.

### (Analysis of the Experiment Results)

As clearly seen from Table 1, the welding defect rate for the present invention capacitor X was 0%, while the welding defect rate for the comparative capacitor Y was 5.3%. It is believed that these results are attributed to the following reason. In the comparative capacitor Y, the removed portion A of the dielectric oxide film 2 was limited to the weld-secured portion 20. In contrast, in the present invention capacitor X, the removed portion A of the dielectric oxide film 2 was present from the weld-secured portion 20 to the edge portion 21. As a result, electric current was able to escape to the edge portion 21 and the region in which electric current flows was enlarged at the time of resistance welding. Therefore, sparks and welding burrs were prevented from occurring.

### INDUSTRIAL APPLICABILITY

The present invention can be applied to multi-layered solid electrolytic capacitors.

### BRIEF DESCRIPTION OF THE DRAWINGS

[Fig. 1] Fig. 1 is a vertical cross-sectional view of a multi-layered solid electrolytic capacitor according to the present invention.
[Fig. 2] Fig. 2 is a plan view showing the exterior of the multi-layered solid electrolytic capacitor from which an exterior resin has been removed.
[Fig. 3] Fig. 3 is a view illustrating another modified example of the portion from which the dielectric oxide film has been removed.
[Fig. 4] Fig. 4 is a view illustrating yet another modified example of the portion from which the dielectric oxide film has been removed.
[Fig. 5] Fig. 5 is a plan view illustrating the way in which the dielectric oxide film is removed in a capacitor X of the invention.
[Fig. 6] Fig. 6 is a vertical cross-sectional view illustrating the way in which the dielectric oxide film is removed in the capacitor X of the invention.
[Fig. 7] Fig. 7 is a plan view illustrating the way in which the dielectric oxide film is removed in a comparative capacitor Y.
[Fig. 8] Fig. 8 is a vertical cross-sectional view illustrating the way in which the dielectric oxide film is removed in the comparative capacitor Y.
[Fig. 9] Fig. 9 is a cross-sectional view of a conventional capacitor element.

### DESCRIPTION OF REFERENCE NUMERALS

1: metal
2: dielectric oxide film
3: solid electrolyte layer
4: carbon layer
5: silver paint layer
6: capacitor element
7: anode lead part
8: main body part
10: multi-layered solid electrolytic capacitor
20: weld-secured portion
21: edge portion of anode lead part
A: removed portion

## Claims

1. A multi-layered solid electrolytic capacitor comprising a plurality of capacitor elements, each comprising a dielectric oxide film formed on a surface of a valve metal, a main body part having a cathode layer formed on a portion of the surface of the dielectric oxide film, and an anode lead part in which the dielectric oxide film is exposed, wherein the anode lead parts of adjacent ones of the capacitor elements are weld-secured to one another with the capacitor elements being in a stacked condition, the multi-layered solid electrolytic capacitor being **characterized in that**:
a portion from which the dielectric oxide film has been removed exists in an edge portion of the anode lead part that is substantially parallel to a boundary portion between the main body part and the anode lead part and that is not in contact with the main body part.

2. The multi-layered solid electrolytic capacitor according to claim 1, wherein the dielectric oxide film-removed portion that exists in the edge portion is provided so as to extend to the weld-secured portion.

3. The multi-layered solid electrolytic capacitor according to claim 2, wherein the dielectric oxide film-removed portion exists so as to be widened to vicinities of both side portions of the anode lead part.

4. The multi-layered solid electrolytic capacitor according to claim 2, wherein the dielectric oxide film-removed portion exists so as to be widened to a vicinity of the boundary portion between the anode lead part and the main body part.

5. The multi-layered solid electrolytic capacitor according to any one of claims 1 through 4, wherein the dielectric oxide film-removed portion exists in either one of an upper surface or a lower surface of the anode lead part.

6. The multi-layered solid electrolytic capacitor according to any one of claims 1 through 4, wherein the dielectric oxide film-removed portion exists in both upper and lower surfaces of the anode lead part.

7. The multi-layered solid electrolytic capacitor according to any one of claims 1 through 6, wherein the valve metal comprises one of aluminum, tantalum, and niobium, and a solid electrolyte layer comprises one of a polythiophene-based conductive polymer, a polypyrrole-based conductive polymer, a polyaniline-based conductive polymer, a polyfuran-based conductive polymer, and manganese dioxide.

8. A method of manufacturing a multi-layered solid electrolytic capacitor comprising:
a first step of forming a dielectric oxide film on a surface of a valve metal, and thereafter forming a cathode layer on a portion of a surface of the dielectric oxide film to produce a capacitor element comprising a main body part and an anode lead part, the main body part having the cathode layer and the anode lead part having the dielectric oxide film that is exposed;
a second step of removing the dielectric oxide film in an edge portion of the anode lead part that is substantially parallel to a boundary portion between the main body part and the anode lead part and that is not in contact with the main body part; and
a third step of weld-securing anode lead parts of adjacent ones of a plurality of capacitor elements that are in a stacked condition.

9. The method of manufacturing a multi-layered solid electrolytic capacitor according to claim 8, wherein, in the second step, the dielectric oxide film is further removed from an edge portion of the anode lead part to a portion to be weld-secured, in addition to the removing the dielectric oxide film in the edge portion.

10. The method of manufacturing a multi-layered solid electrolytic capacitor according to claim 9, wherein, in the second step, the dielectric oxide film is removed so as to be widened to vicinities of both side portions of the anode lead part.

11. The method of manufacturing a multi-layered solid electrolytic capacitor according to claim 9, wherein, in the second step, the dielectric oxide film is further removed so as to be widened to a vicinity of the boundary portion between the anode lead part and the main body part.

12. The method of manufacturing a multi-layered solid electrolytic capacitor according to any one of claims 8 through 11, wherein, in the second step, the dielectric oxide film is removed in either one of an upper surface or a lower surface of the anode lead part.

13. The method of manufacturing a multi-layered solid electrolytic capacitor according to any one of claims 8 through 11, wherein, in the second step, the dielectric oxide film is removed in both upper and lower surfaces of the anode lead part.

14. The method of manufacturing a multi-layered solid electrolytic capacitor according to any one of claims 8 through 13, wherein, in the second step, the dielectric oxide film of the anode lead part is removed by a laser method.
